# EUROPÄISCHE PATENTSCHRIFT

(11) **EP 0 640 895 B1**
(45) Veröffentlichungstag und Bekanntmachung des Hinweises auf die Patenterteilung: **16.04.1997**
(21) Anmeldenummer: 94112396.0
(22) Anmeldetag: 09.08.1994
(51) Int. Cl.: G04C 3/14, G04C 3/00, H02K 1/02, H02K 37/14

(54) **Schrittmotor für eine elektrische Uhr**
Stepping motor for an electric timepiece
Moteur pas à pas pour une pièce d'horlogerie électrique

(30) Priorität: 24.08.1993 DE 4328421
(43) Veröffentlichungstag der Anmeldung: 01.03.1995
(73) Patentinhaber: Vacuumschmelze GmbH, 63450 Hanau (DE)
(72) Erfinder: Behnke, Wernfried, D-63517 Rodenbach (DE); Radeloff, Christian, Dr., D-63486 Bruchköbel (DE)
(74) Vertreter: Fuchs, Franz-Josef, Dr.-Ing.

(56) Entgegenhaltungen:
- EP-A- 0 505 595
- CH-A- 629 063
- DE-A- 2 847 921

## Beschreibung

Die Erfindung betrifft einen Schrittmotor für eine elektrische Uhr, insbesondere für eine analoge Quarzuhr mit einem einstückigen, einen Rotor umgebenden Stator aus einem Material mit einer hohen Sättigungsinduktion sowie einen Spulenkern zur impulsförmigen Magnetisierung des Stators, der aus einem weichmagnetischen Material mit größerer Sättigungsinduktion als diejenige des Materials des Stators besteht.

Ein derartiger Schrittmotor ist aus DE-OS 28 47 921 bekannt. Der Magnetkreis des Schrittmotors besteht im wesentlichen aus einem Spulenkern und einem einstückigen Stator, der den dauermagnetischen Rotor umgibt. Die Verwendung eines einstückigen Stators hat den Vorteil, daß gerade bei sehr kleinen Motoren die Justierung eines Luftspaltes nicht mehr erforderlich ist und man mit weniger Teilen wesentlich preiswerter den Schrittmotor aufbauen kann. Zur Funktionsweise dieses Schrittmotors ist es allerdings nötig, daß bei Anlegen eines Impulses die Engstellen zu beiden Seiten des Rotors gesättigt werden, so daß ein den Rotor durchdringender Streufluß auftreten und damit den Rotor zu einer Drehbewegung veranlassen kann.

Da man bei sehr kleinen Uhren aus fertigungstechnischen Gründen den Querschnitt der zu beiden Seiten des Rotors zu bildenden Stege bei Verwendung eines einstückigen Stators nicht beliebig vermindern kann, wählt man für das Material des Stators eine weichmagnetische Legierung, die leichter in die Sättigung geht, als die weichmagnetische Legierung des Spulenkerns, die den Fluß zur Sättigung der Engstellen des Stators aufbringen muß.

Es ist weiterhin aus DE-OS 19 17 313 bekannt, für einen Schrittmotor für Uhren Nickel-Eisen-Legierungen mit mindestens 40 Gew.-% Nickel und gegebenenfalls Zusätzen von etwa 3 % Silizium oder Molybdän zu verwenden, um den Widerstand der Legierung zu erhöhen und damit die auftretenden Wirbelstromverluste herabzusetzen. Hier besteht jedoch der Stator aus zwei Teilen, die so montiert sind, daß zu beiden Seiten des Rotors ein Luftspalt entsteht. Infolgedessen ist die Problematik der Sättigung von Engstellen bei einem einstückigen Stator hier nicht gegeben und das Magnetmaterial kann sowohl für Stator als auch Rotor gleich sein.

Weiterhin ist es aus EP-A 505 595 bekannt, den einstückigen Stator eines Schrittmotors für Uhren aus einer Nickel-Eisen-Legierung vorzugsweise mit 36 bis 55 Gew.-% Nickel herzustellen, die bis zu 8 Gew.-% mindestens eines der Elemente Mo, Nb, Zr, Mn und V enthält. Hier soll allerdings der Spulenkern des Schrittmotors ebenfalls aus einer Nickel-Eisen-Legierung mit 35 bis 55 Gew.-% Nickel und den genannten Zusätzen bestehen. Durch derartige Materialkombinationen lassen sich Schrittmotoren mit einstückigem Stator herstellen.

Aufgabe der vorliegenden Erfindung ist es demgegenüber, einerseits den Wirkungsgrad derartiger Schrittmotoren und andererseits die Empfindlichkeit gegen äußere Störfelder weiter zu verbessern. Hierzu wurde erkannt, daß es bei Beibehaltung der den Widerstand erhöhenden und die Sättigungsinduktion vermindernden Zusätze im Werkstoff des Stators besonders vorteilhaft ist, wenn sich die Nickelgehalte der Nickel-Eisen-Legierungen für den Stator und den Spulenkern stärker unterscheiden und wenn die besonders hohe Sättigungsinduktion des Materials für den Magnetkern von über 1,3 T durch Vermeidung von die Sättigungsinduktion vermindernden Zusätzen beibehalten wird.

Die Aufgabe wird durch die Verwendung von weichmagnetischen Legierungen entsprechend dem Kennzeichen des Anspruchs 1 gelöst.

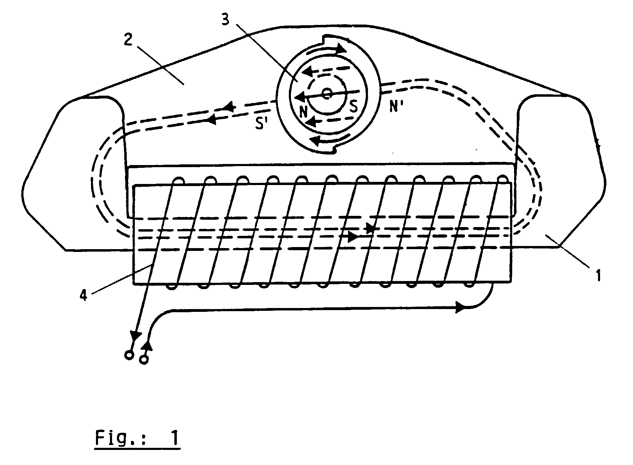

Zur weiteren Erläuterung der Erfindung zeigt Fig. 1 den schematischen Aufbau eines Schrittmotors. Der Schrittmotor beinhaltet einen Spulenkern 1, der mit einem Stator 2 verbunden ist, wobei den Stator 2 ein Rotor 3 umgibt. Der Spulenkern 1 ist mit einer elektrischen Wicklung 4 versehen. Durch eine nicht eingezeichnete quarzgesteuerte Elektronik wird die Batteriespannung in Form von Rechteckspannungsimpulsen auf die Wicklung 4 des Spulenkerns 1 gegeben. Durch Sättigung der Engstellen beiderseits des Rotors entsteht ein den Rotor durchsetzender Streufluß der den Rotor schrittweise dreht.

Bei einem derartigen Schrittmotor erhält man erfindungsgemäß einen besonders guten Wirkungsgrad, wenn man für den Stator 2 eine Legierung im Bereich von 34 bis 40 Gew.-% Nickel bei Zusätzen von mindestens einem der Elemente 0,1 bis 8 % Mo, Nb, Cr, Mn, V und/oder 0,1 bis 5 % Si, Al, Ti, Rest Eisen verwendet. Diese Legierungen besitzen eine Sättigungsinduktion im Bereich von 0,6 bis 1,0 T. In Kombination mit dieser Legierung für den Stator 2 läßt sich dann für den Spulenkern 1 eine Legierung mit über 42 % Nickel, Rest Eisen verwenden, deren Zusätze so gering sind, daß eine Sättigungsinduktion von über 1,4 T gewährleistet ist. Besonders vorteilhaft ist es, eine Legierung mit 45 bis 50 % Nickel und damit besonders hoher Sättigungsinduktion einzusetzen.

## Patentansprüche

1. Schrittmotor für eine elektrische Uhr, insbesondere für eine analoge Quarzuhr mit einem einstückigen, einen Rotor (3) umgebenden Stator (2) aus einem Material mit einer hohen Sättigungsinduktion sowie einen Spulenkern (1) zur impulsförmigen Magnetisierung des Stators, der aus einem weichmagnetischen Material mit größerer Sättigungsinduktion als diejenige des Materials des Stators besteht, **dadurch gekennzeichnet**, daß der Stator (2) aus einer Nickel-Eisen-Legierung mit 34 bis 40 Gew.-% Nickel und die Sättigungsinduktion vermindernden Zusätzen im Bereich von 0,5 bis 8 % eines oder mehrerer der Elemente Mo, Nb, Zr, Mn, V, Cr und / oder 0,5 bis 5 % eines oder mehrerer der Elemente Si, Al, Ti besteht, während gleichzeitig das Material des Spulenkerns (1) aus einer binären Nickel-Eisen-Legierung mit einem Nickelgehalt über 42 % und einer Sättigungsinduktion von mehr als 1,3 T ohne die genannten Zusätze besteht.

2. Schrittmotor nach Anspruch 1, **dadurch gekennzeichnet**, daß das Material des Stators aus einer Nickel-Eisen-Legierung mit 34 bis 35 % Nickel und 3 bis 6 % Molybdän oder Chrom besteht.

3. Schrittmotor nach Anspruch 1, **dadurch gekennzeichnet**, daß das Material des Spulenkerns aus einer binären Nickel-Eisen-Legierung mit 45 bis 50 % Nickel besteht.

## Claims

1. Stepping motor for an electric clock, in particular for an analogue crystal-controlled clock, having a single-piece stator (2) which surrounds a rotor (3) and is made from a material of high saturation induction, and having a coil core (1) for pulsed magnetization of the stator, which consists of a magnetically soft material of higher saturation induction than that of the material of the stator, characterized in that the stator (2) consists of a nickel-iron alloy having 34 to 40% by weight of nickel and saturation induction-reducing additives in the range of 0.5 to 8% of one or more of the elements Mo, Nb, Zr, Mn, V, Cr and/or 0.5 to 5% of one or more of the elements Si, Al, Ti, while at the same time the material of the coil core (1) consists of a binary nickel-iron alloy having a nickel content of more than 42% and a saturation induction of more than 1.3 T without the said additives.

2. Stepping motor according to Claim 1, characterized in that the material of the stator consists of a nickel-iron alloy having 34 to 35% nickel and 3 to 6% molybdenum or chromium.

3. Stepping motor according to Claim 1, characterized in that the material of the coil core consists of a binary nickel-iron alloy having 45 to 50% nickel.

## Revendications

1. Moteur pas à pas pour une montre électrique, notamment une montre analogique à quartz, comportant un stator (2) d'un seul tenant en un matériau à induction de saturation élevée qui entoure un rotor (3), ainsi qu'un noyau de bobine (1) destiné à la magnétisation pulsatoire du stator, qui est constitué d'un matériau magnétique doux dont l'induction de saturation est plus élevée que celle du matériau du stator, **caractérisé par le fait que** le stator (2) est constitué d'un alliage nickel-fer contenant 34 à 40 % en poids de nickel et des additifs réduisant l'induction de saturation dans la plage de 0,5 à 8 % de l'un ou de plusieurs des éléments parmi le Mo, le Nb, le Zr, le Mn, le V, le Cr et/ou 0,5 à 5 % de l'un ou de plusieurs des éléments parmi le Si, l'Al, le Ti, alors que le matériau du noyau de bobine (1) est simultanément constitué d'un alliage binaire nickel-fer ayant une teneur en nickel supérieure à 42 % et une induction de saturation supérieure à 1,3 T, sans les additifs indiqués.

2. Moteur pas à pas selon la revendication 1, **caractérisé par le fait que** le matériau du stator est constitué d'un alliage nickel-fer contenant 34 à 35 % de nickel et 3 à 6 % de molybdène ou de chrome.

3. Moteur pas à pas selon la revendication 1, **caractérisé par le fait que** le matériau du noyau de bobine est constitué d'un alliage binaire nickel-fer contenant 45 à 50 % de nickel.
